# EUROPEAN PATENT APPLICATION

(11) **EP 2 610 538 A2**
(43) Date of publication of application: **03.07.2013**
(21) Application number: 12181607.8
(22) Date of filing: 23.08.2012
(51) Int. Cl.: F16M 11/04, F16M 11/10, F16M 13/02

(54) **Supporting device to display apparatus**

(30) Priority: 30.12.2011 KR 20110147583
(71) Applicant: Samsung Electronics Co., Ltd., Suwon-si, Gyeonggi-do, 443-742 (KR)
(72) Inventor: In, Woo-Sung, Korea (KR); Kim, Yong Jin, Seoul, Korea (KR)
(74) Representative: Misselbrook, Paul

(57) **Abstract**

A supporting device (100) to a display apparatus having an improved configuration to maximize utilization of a space between the display apparatus and a wall (W) is disclosed. The supporting device to the display apparatus includes a plurality of support protrusions (140) coupled to a rear surface of the display apparatus, a plurality of first support panels (110) fixed to the wall, and a plurality of second support panels (120) rotatably coupled to the first support panels, respectively, each second support panel having a receiving region (128) by which a corresponding one of the plurality of support protrusions is received.

## Description

### BACKGROUND

### 1. Field

Apparatuses consistent with exemplary embodiments relate to a supporting device to a display apparatus, which is devised to support and fix the display apparatus to a wall.

### 2. Description of the Related Art

To ensure more effective utilization of an indoor space, supporting devices are largely used to hang and fix a flat panel type display apparatus, such as a Liquid Crystal Display (LCD) or a Plasma Display Panel (PDP), to a wall.

Conventional supporting devices may have a simple function to fix a display apparatus to a wall, a swivel function to enable leftward/rightward movement of a display apparatus, or a tilt function to enable upward/downward movement of a display apparatus.

However, if a space between the display apparatus and the wall is narrow, these supporting devices may have a difficulty in connecting a variety of cables, used to supply power to the display apparatus or supply signals for control of the display apparatus, to a rear surface of the display apparatus. Expanding the space between the display apparatus and the wall to facilitate connection of the cables, however, may have an adverse effect on effective utilization of the indoor space.

Moreover, the conventional supporting devices have difficulties in terms of installation because leveling a display apparatus fixed to a wall may require separation or recoupling of the display apparatus from or to the supporting device, and even if not separating the display apparatus from the supporting device, the conventional supporting devices may require unfastening fixing members, such as screws, etc., used to fix the supporting device, and then fastening the screws after leveling of the display apparatus.

### SUMMARY

Therefore, it is an aspect of exemplary embodiments to provide a supporting device to a display apparatus, which has an improved configuration to maximize utilization of a space between the display apparatus and a wall.

It is another aspect of the present invention to provide a supporting device to a display apparatus, which has an improved configuration to simply level the display apparatus fixed to the supporting device.

Additional aspects will be set forth in part in the description which follows and, in part, will be obvious from the description, or may be learned by practice of the inventive concept.

In accordance with one aspect of an exemplary embodiment, a supporting device for a display apparatus to fix the display apparatus to a wall, includes one or more support protrusions coupled to a rear surface of the display apparatus, one or more first support panels fixed to the wall, and one or more second support panels rotatably coupled to the one or more first support panels, respectively, at least one from among the one or more second support panel having a receiving region by which a corresponding one of the one or more support protrusions is received.

Each of the one or more first support panels may include a shaft coupling portion protruding from an upper end thereof, the shaft coupling portion centrally defining a shaft bore and having a longitudinal slit, and at least one from among the one or more second support panels may include a first rotating shaft protruding from an inner surface thereof so as to be inserted into the shaft bore, and a second rotating shaft configured to surround an outer surface of the shaft coupling portion, the second rotating shaft defining an insertion gap with the first rotating shaft therebetween such that the shaft coupling portion is inserted into the insertion gap.

The supporting device may further include a first rotation stopper provided at the upper end of the at least one from among the one or more first support panels connected to the shaft coupling portion, the first rotation stopper serving to limit a rotation angle of the at least one from among the one or more second support panels by coming into contact with one end of the second rotating shaft when the at least one from among the one or more second support panels is rotated. The supporting device may further include a second rotation stopper configured to connect the first rotating shaft and the inner surface of the at least one from among the one or more second support panels to each other, the second rotation stopper serving to limit a rotation angle of the at least one from among the one or more second support panels by coming into contact with one end of the shaft coupling portion when the at least one from among the one or more second support panels is rotated.

Each of the one or more support protrusions may include a first diameter portion coming into contact with the rear surface of the display apparatus, a second diameter portion supported by the inner surface of the at least one from among the one or more second support panels, and a third diameter portion configured to connect the first diameter portion and the second diameter portion to each other, the third diameter portion having a diameter less than diameters of the first diameter portion and the second diameter portion.

The receiving region may include a support protrusion insertion hole having a diameter grater than the diameter of the second diameter portion such that the second diameter portion is inserted into one of the one or more second support panels, a first guide slot communicating with the support protrusion insertion hole to guide movement of the one of the one or more support protrusion and the display apparatus in a first direction in a state in which the second diameter portion is inserted into one of the one or more second support panels, and a seating recess which communicates with the first guide slot and is configured such that the third diameter portion is seated therein.

A width of the first guide slot may be less than the diameter of the second diameter portion and greater than the diameter of the third diameter portion.

The receiving region may further include a second guide slot intersecting and communicating with the first guide slot to guide movement of the display apparatus in a second direction different from the first direction.

At least one from among the one or more first support panels may include a plurality of screw holes formed at positions corresponding to the support protrusion insertion hole and the first guide slot to fix the at least one from among the one or more first support panels to the wall.

At least one anti-separation member may be coupled to at least one of the one or more first support panels and the one or more second support panels, to prevent the one of the one or more support protrusions received in the receiving region from being separated from the receiving region.

The at least one anti-separation member may be pressed by the second diameter portion when the second diameter portion is inserted into the support protrusion insertion hole, thereby defining a space to allow the one of the one or more support protrusions to be moved in the first direction through the first guide slot, and is returned to an original position thereof when released from the second diameter portion as the one of the one or more support protrusions is seated in the seating recess.

The at least one anti-separation member may comprise a leaf-spring.

At least one of the one or more support protrusions may include at least one support frame to keep the display apparatus rotated, and the support frame may be coupled to the one of the one or more support protrusions so as to be rotatable from the display apparatus to the wall.

The one of the one or more support protrusions may include a rotation stopper to limit a rotation angle of the support frame.

The supporting device may further include a cover coupled to a lateral side of one of the one or more first support panels and the one or more second support panels to prevent the one or more first support panels and the one or more second support panels coupled to each other from being separated axially.

One of the one or more first support panels and the one or more second support panel may include at least one cover fastening portion to fasten the cover to the lateral side of the corresponding panel, and the cover fastening portion may include a fastening rib protruding from an inner surface of the one of the one or more first support panels and the one or more second support panels, the fastening rib centrally defining a fastening bore and having a longitudinal slit. The supporting device may further include a distance adjusting member to adjust a distance between the display apparatus and the wall, and the distance adjusting member may include a first distance adjusting member coupled to a rear surface of at least one from among the one or more first support panels, and a second distance adjusting member coupled to a front surface of at least one from among the one or more support protrusions.

The first distance adjusting member may include a panel fixing portion fixed to the at least one from among the one first support panels, and wall fixing portions bent from both ends of the panel fixing portion and fixed to the wall.

In accordance with another aspect of an exemplary embodiment, a supporting device for a display apparatus to fix the display apparatus to a wall, includes one or more support protrusions coupled to a rear surface of the display apparatus, one or more first support panels fixed to the wall, and one or more second support panels rotatably coupled to the first support panels, wherein at least one from among the one or more second support panel includes a support protrusion insertion hole, into which a corresponding one of the one or more support protrusions is inserted, a seating recess in which the corresponding support protrusion is seated, and a position adjusting slot which indicates with the support protrusion insertion hole and the seating recess to enable adjustment in an installation position of the display apparatus.

The position adjusting slot may include a first guide slot to guide movement of the display apparatus in a first direction, and a second guide slot intersecting with the first guide slot to guide movement of the display apparatus in a second direction different from the first direction.

The first guide slot may be vertically formed, and the second guide slot may be inclined with respect to the first guide slot.

One of a plurality of second guide slots formed respectively in the one or more second support panels may be inclined in an opposite direction to that of the other.

### BRIEF DESCRIPTION OF THE DRAWINGS

These and/or other aspects of exemplary embodiments will become apparent and more readily appreciated from the following description, taken in conjunction with the accompanying drawings, of which:
FIG. 1 is a perspective view of a supporting device to a display apparatus according to an exemplary embodiment;
FIG. 2 is a front view of the supporting device to the display apparatus according to an exemplary embodiment;
FIG. 3 is an exploded perspective view of the supporting device to the display apparatus according to an exemplary embodiment;
FIGS. 4A and 4B are views of an operation to support and fix the display apparatus to a wall using the supporting device to the display apparatus according to an exemplary embodiment;
FIG. 5 is a view illustrating a state in which the display apparatus, which has been rotated, is fixed to and supported by a wall according to an exemplary embodiment;
FIG. 6 is a side sectional view of FIG. 5;
FIGS. 7A and 7B are views illustrating leveling of the display apparatus using the supporting device to the display apparatus according to an exemplary embodiment; and
FIG. 8 is an exploded perspective view of a distance adjusting member.

### DETAILED DESCRIPTION

Reference will now be made in detail to exemplary embodiments, examples of which are illustrated in the accompanying drawings, wherein like reference numerals refer to like elements throughout.

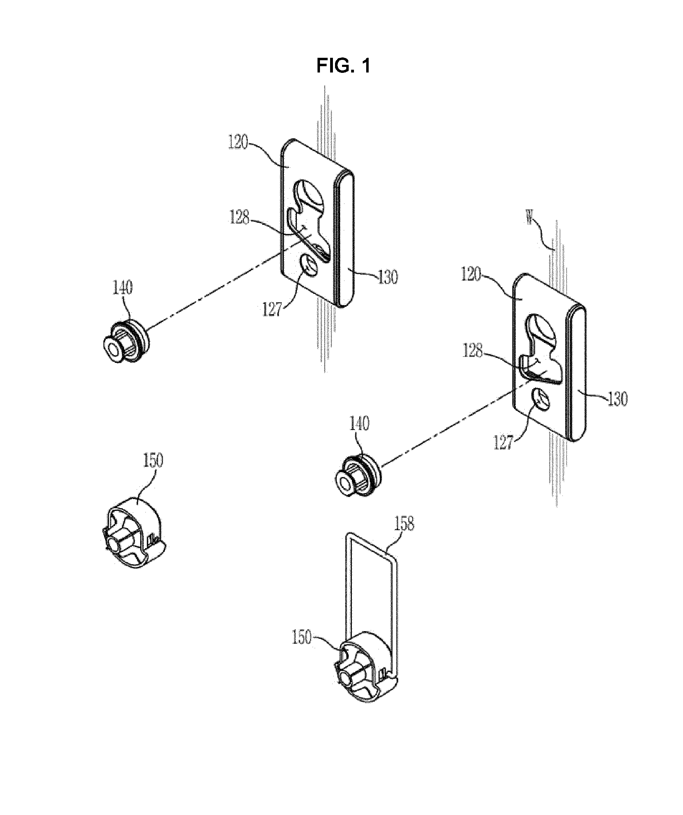

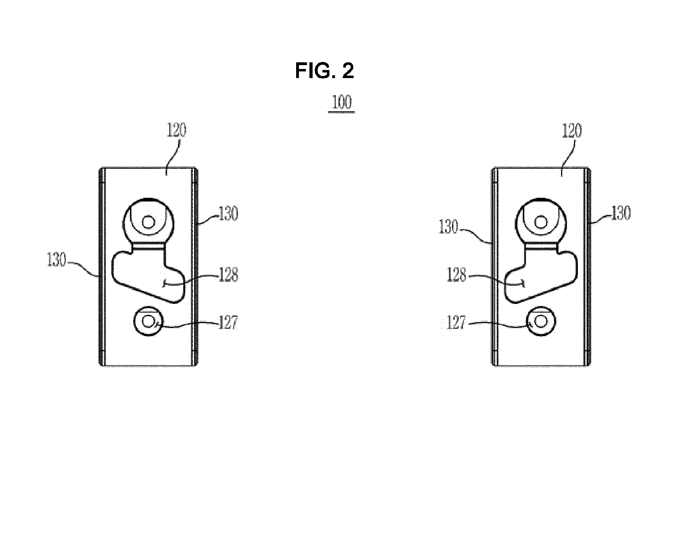

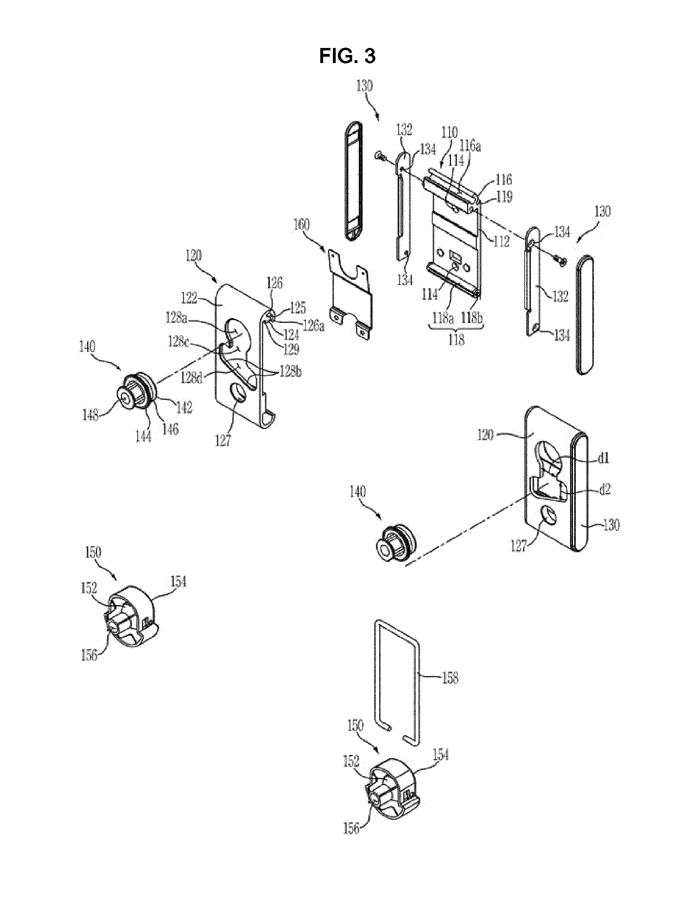

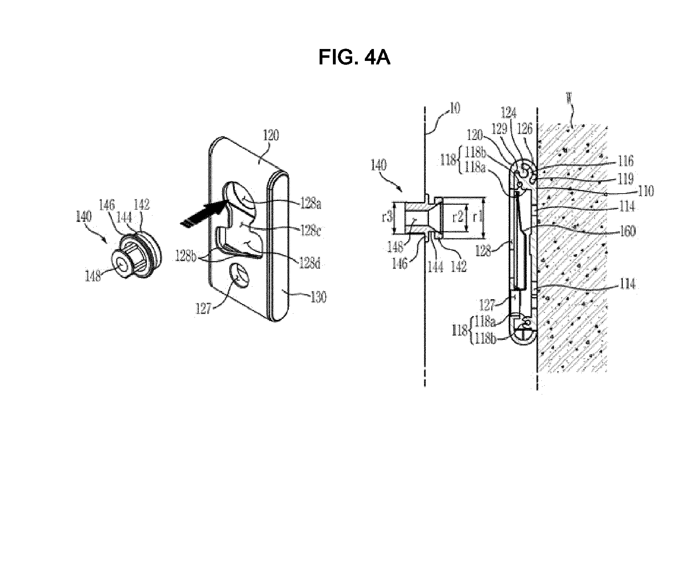

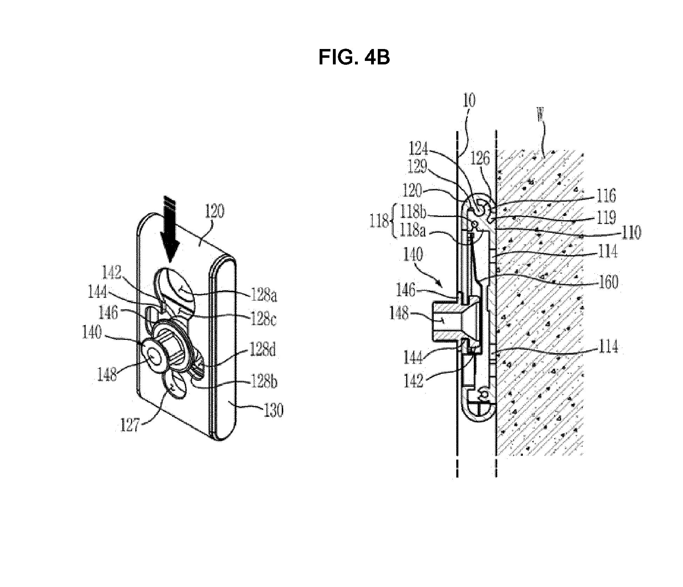

FIG. 1 is a perspective view of a supporting device to a display apparatus according to an exemplary embodiment, FIG. 2 is a front view of the supporting device to the display apparatus according to an exemplary embodiment, FIG. 3 is an exploded perspective view of the supporting device to the display apparatus according to an exemplary embodiment, and FIGS. 4A and 4B are views of an operation to support and fix the display apparatus to a wall using the supporting device to the display apparatus according to an exemplary embodiment.

As shown in FIGS. 1 to 4B, the supporting device 100 to the display apparatus includes a plurality of first support panels 110 fixed to a wall W, a plurality of second support panels 120 rotatably coupled respectively to the first support panels 110, covers 130 configured to cover lateral sides of the first and second support panels 110 and 120, a plurality of support protrusions 140 and 150 coupled to a rear surface of the display apparatus 10, and an anti-separation member 160 coupled to an inner surface of any one of the first support panel 110 and the second support panel 120.

The plurality of first support panels 110 may include at least two first support panels arranged in a width direction of the display apparatus 10. Each first support panel 110 includes a panel body 112, one or more first screw holes 114 to fix the first support panel 110 to the wall W, a shaft coupling portion 116 formed at an upper end of the panel body 112, and a cover fastening portion 118 formed at an inner surface of the panel body 112.

The first screw holes 114 may be arranged in a vertical direction of the panel body 112, and may be perforated in the panel body 112 to allow the first support panel 110 to be fixed to the wall W using screws, etc.

The shaft coupling portion 116 may be a cylindrical portion that protrudes from the upper end of the panel body 112 to extend throughout a width of the panel body 112. The shaft coupling portion 116 centrally defines a shaft bore 116a therein and has a longitudinal slit. A first rotating shaft 124 of the second support panel 120 is inserted into the shaft bore 116a.

The upper end of the panel body 112, from which the shaft coupling portion 116 protrudes, is provided with a first rotation stopper 119 at a position adjacent to the shaft coupling portion 116. The first rotation stopper 119 is configured to come into contact with one end 126a of a second rotating shaft 126 of the second support panel 120, thereby limiting a rotation angle of the second support panel 120. Accordingly, the first rotation stopper 119 prevents damage to the display apparatus 10 caused when an upper portion of the display apparatus 10 collides with the wall W via rotation thereof.

The cover fastening portion 118 includes a fastening rib 118a which centrally defines a fastening bore 118b and has a longitudinal slit.

Each second support panel 120 includes a panel body 122, the first rotating shaft 124 protruding from an inner surface of the panel body 122, the second rotating shaft 126 having a cylindrical shape to surround an outer surface of the shaft coupling portion 116, first through-holes 127 formed at positions corresponding to the first screw holes 114, and a receiving region 128 perforated in the panel body 122 such that the support protrusions 140 and 150 are movably inserted and seated in the receiving region 128.

The first rotating shaft 124 extends throughout a width of the panel body 122 so as to be inserted into the shaft bore 116a.

A second rotation stopper 129 is provided between the first rotating shaft 124 and an inner surface of the second support panel 120 from which the first rotating shaft 124 protrudes. That is, the second rotation stopper 129 is configured to connect the first rotating shaft 124 and the inner surface of the second support panel 124 to each other. The second rotation stopper 129 serves to limit a rotation angle of the second support panel 120 by coming into contact with one end 116b of the shaft coupling portion 116. Accordingly, the second rotation stopper 129 prevents damage to the display apparatus 10, caused when the upper portion of the display apparatus 10 collides with the wall W during rotation thereof, along with the first rotation stopper 119.

The second rotating shaft 126 extends throughout a width direction of the panel body 122 and defines an insertion gap 125 with the first rotating shaft 124 therebetween such that the shaft coupling portion 116 may be inserted into the insertion gap 125.

The first through-holes 127 are perforated in the panel body 122 at positions corresponding to the first screw holes 114. By manually fastening, e.g., screws through the first through-holes 127 and the first screw holes 114 in a state in which the first support panel 110 and the second support panel 120 are coupled to each other, the first support panel 110 may be easily fixed to the wall W.

The receiving region 128 includes a support protrusion insertion hole 128a, which has a greater diameter than a second diameter portion 144 of the first support protrusion 140 to allow the second diameter portion 144 to be inserted into the second support panel 120, a seating recess 128b in which the first support protrusion 140 is seated, and position adjusting slots 128c and 128d, which communicate with the support protrusion insertion hole 128a and the seating recess 128b and enable adjustment in the installation position of the display apparatus 10 in a state in which the display apparatus 10 is supported by the wall W using the supporting device 100. The seating recess 128b may come into contact with a third diameter portion 146 of the first support protrusion 140 to ensure that the first support protrusion 140 and the display apparatus 10 coupled to the first support protrusion 140 may be supported at and fixed to predetermined positions.

The position adjusting slots 128c and 128d include a first guide slot 128c and a second guide slot 128d. The first guide slot 128c serves to guide vertical movement of the first support protrusion 140 and the display apparatus 10 coupled to the first support protrusion 140 in a state in which the second diameter portion 144 is inserted into the second support panel 120 through the support protrusion insertion hole 128a. The second guide slot 128d intersects and communicates with the first guide slot 128c and is inclined with respect to the first guide slot 128c to guide horizontal movement of the support protrusion 140 and the display apparatus 10 coupled to the first support protrusion 140.

Widths d1 and d2 of the first guide slot 128c and the second guide slot 128d may be less than a diameter r2 of the second diameter portion 144 such that one surface of the second diameter portion 144 inserted into the second support panel 120 is supported by the inner surface of the second support panel 120, and may be greater than a diameter r3 of the third diameter portion 146 such that the first guide slot 128c and the second guide slot 128d receive the third diameter portion 146 connected to the second diameter portion 144 in a state in which the second diameter portion 144 is inserted into the second support panel 120.

One of the second guide slots 128d formed respectively in the plurality of second support panels 120 is inclined in an opposite direction to that of the other, such that the display apparatus 10 may be stably supported, other than being deflected to one side, during leveling thereof.

The covers 130 are coupled to both lateral sides of the first support panel 110 and serve to prevent any one of the first and second support panels 110 and 120 coupled to each other from being moved toward the shaft coupling portion 116 or the first rotating shaft 124, thereby preventing unwanted separation between the first and second support panels 110 and 120. Each cover 130 includes a cover body 132, and a second through-hole 134 perforated in the cover body 132, the second through-hole 134 being positioned to correspond to the fastening bore 118b formed at the first support panel 110 in a state in which the cover body 132 is coupled to the lateral side of the first support panel 110.

Meanwhile, the cover 130 may be coupled to the second support panel 120. In this case, the cover fastening portion 118 may be equally formed at the second support panel 120 rather than the first support panel 110.

The plurality of support protrusions 140 and 150 includes a first support protrusion 140 supported by the second support panel 120, and a second support protrusion 150 located below the first support protrusion 140 to come into direct contact with the wall W or to keep the display apparatus 10 rotated.

The first support protrusion 140 includes a first diameter portion 142 coming into contact with the rear surface of the display apparatus 10, the second diameter portion 144 supported by the inner surface of the second support panel 120, the third diameter portion 146 connecting the first diameter portion 142 and the second diameter portion 144 to each other, the third diameter portion 146 having the diameter r3 less than a diameter r1 of the first diameter portion 142 and the diameter r2 of the second diameter portion 144, and a second screw hole 148 penetrating the first diameter portion 142, the second diameter portion 144 and the third diameter portion 146 to couple the first support protrusion 140 to the rear surface of the display apparatus 10 using a screw, etc.

The diameter r2 of the second diameter portion 144 is greater than the widths d1 and d2 of the first guide slot 128c and the second guide slot 128d, such that one surface of the second diameter portion 144 may be supported by the inner surface of the second support panel 120 after the second diameter portion 144 has been inserted into the second support panel 120. The diameter r3 of the third diameter portion 146 is less than the widths d1 and d2 of the first guide slot 128c and the second guide slot 128d, such that the third diameter portion 146 may be received in the first guide slot 128c and the second guide slot 128d.

The second support protrusion 150 includes a first support surface 152 coming into contact with the rear surface of the display apparatus 10, a second support surface 154 extending from the first support surface 152 by a predetermined length to come into contact with the wall W in a state in which the display apparatus 10 is not rotated, a third screw hole 156 penetrating the first support surface 152 and the second support surface 154 to couple the second support protrusion 150 to the rear surface of the display apparatus 10, a support frame 158 having both ends rotatably coupled to both sides of the first support surface 152, and third rotation stoppers 159 to limit a rotation angle of the support frame 158.

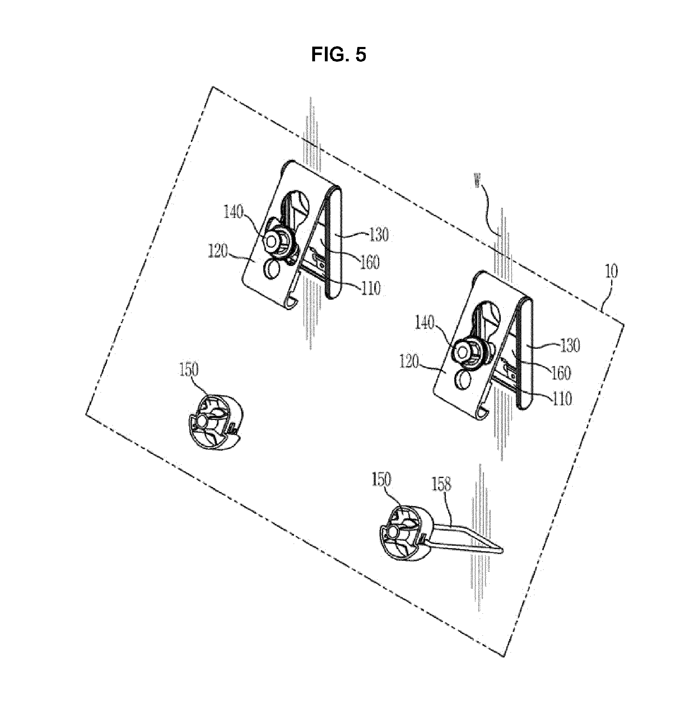

The support frame 158 is pivotally rotatable from the display apparatus 10 toward the wall W, and serves to support the display apparatus 10 to keep the display apparatus 10 rotated (see FIG. 5).

The third rotation stoppers 159 are formed at opposite sides of the first support surface 152, i.e. are located on a rotation path of the support frame 158, and serve to limit the rotation angle of the support frame 158 to prevent the support frame 158 from being rotated more than about 90 degrees. This ensures that the support frame 158 may stably support the display apparatus 10 once the display apparatus 10 is rotated.

The anti-separation member 160 is coupled to the inner surface of the second support panel 120 and serves to prevent the first support protrusion 140 from being separated from the receiving region 128. When the second diameter portion 144 of the first support protrusion 140 is inserted into the support protrusion insertion hole 128a, the second diameter portion 144 applies pressure to the anti-separation member 160, creating a space to enable movement of the first support protrusion 140 through the first guide slot 128c and the second guide slot 128d. Once the second diameter portion 144 no longer applies the pressure, the anti-separation member 160 is returned to an original position thereof, thereby preventing the first support protrusion 140 from being separated from the receiving region 128.

To realize the above-described operation, the anti-separation member 160 may take the form of an elastic leaf-spring.

Hereinafter, an operation of supporting and fixing the display apparatus 10 to the wall W using the supporting device 100 to the display apparatus and an operation of rotating the display apparatus 10 or adjusting the position of the display apparatus 10 in a state in which the display apparatus 10 is supported by the wall W according to an exemplary embodiment will be described.

FIGS. 4A and 4B are views of an operation to support and fix the display apparatus to a wall using the supporting device to the display apparatus according to an exemplary embodiment,

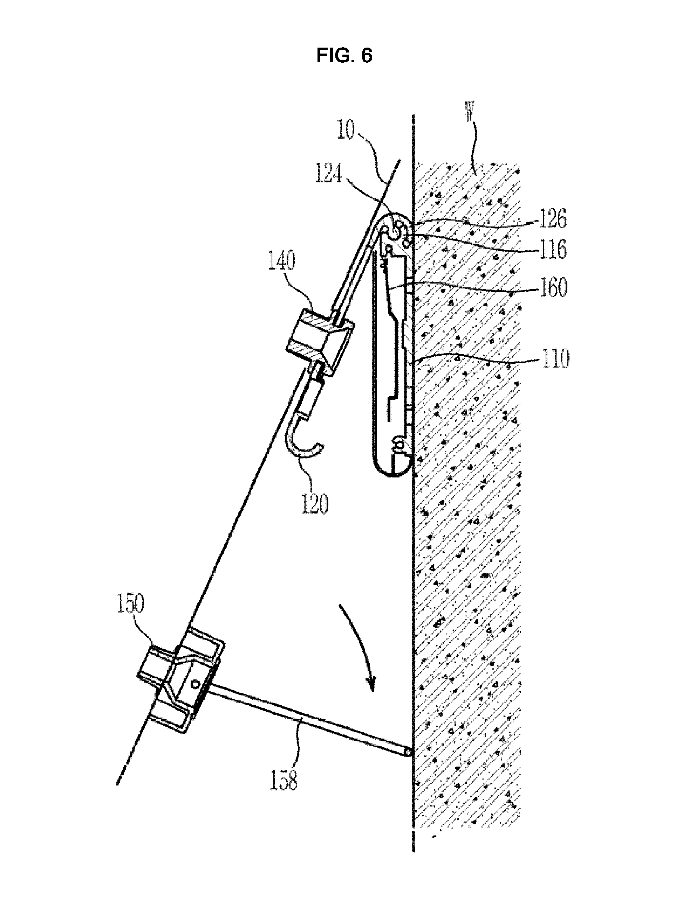

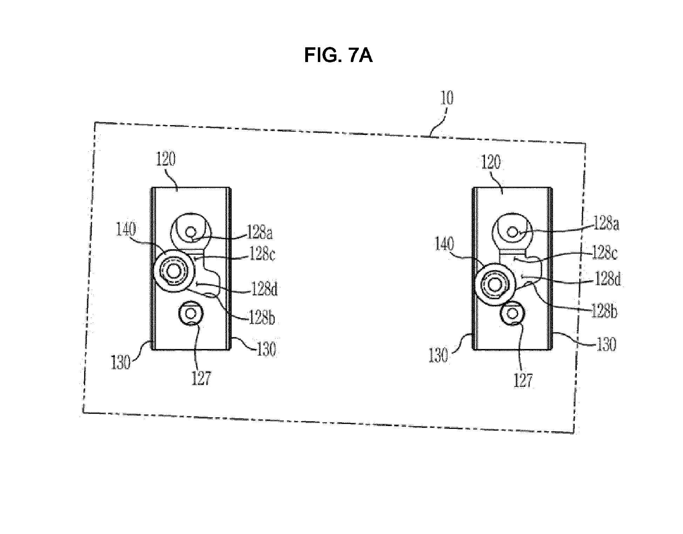

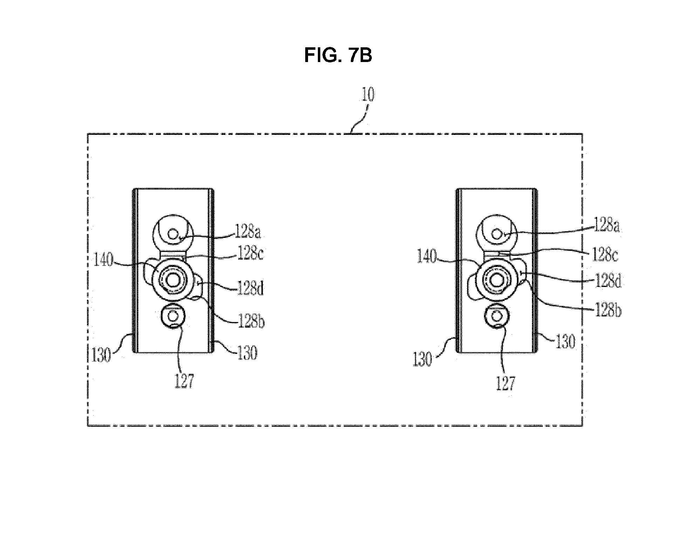

FIG. 5 is a view illustrating a state in which the display apparatus, which has been rotated, is fixed to and supported by a wall according to an exemplary embodiment, FIG. 6 is a side sectional view of FIG. 5, and FIGS. 7A and 7B are views illustrating a leveling of the display apparatus using the supporting device to the display apparatus according to an exemplary embodiment.

First, in a state in which a pair of the first support protrusions 140 and a pair of the second support protrusions 150 are coupled respectively at upper and lower positions to the rear surface of the display apparatus 10 and the first support panels 110 and the second support panels 120 are coupled to each other, screws may be fastened through the first through-holes 127 and the first screw holes 114 to fix the first support panels 110 to the wall W.

Next, as shown in FIGS. 4A and 4B, after the second diameter portion 144 of each first support protrusion 140 is received into a space defined between the first support panel 110 and the second support panel 120 through the support protrusion insertion hole 128a of the second support panel 120, the display apparatus 10 is moved downward through the first guide slot 128c.

Finally, once the first support protrusion 140 is seated in the seating recess 128b, the display apparatus 10 is supported and fixed at a predetermined position.

If the display apparatus 10 supported by and fixed to the wall W using the supporting device 100 is tilted, the position of the display apparatus 10 may be accurately adjusted using the position adjusting slots 128c and 128d including the first guide slot 128c and the second guide slot 128d as shown in FIGS. 7A and 7B. Since the two second guide slots 128d formed respectively at a pair of the second support panels 120 are inclined in opposite directions, the display apparatus 10 may be stably supported without a risk of being deflected to one side while the position of the display apparatus 10 is adjusted.

In the case in which a variety of wiring operations, such as connection of cables to the rear surface of the display apparatus 10, is necessary, as shown in FIGS. 5 and 6, after rotating the display apparatus 10 about the first rotating shaft 124, the support frame 158 coupled to the second support protrusion 150 is rotated toward the wall W so as to be supported by the wall W. In this way, a space sufficient for convenient wiring operations is defined between the rear surface of the display apparatus 10 and the wall W.

If the wall W on which the display apparatus 10 is disposed has any protruding structure, such as a switch, or if the wall W has a protruding portion, it may be necessary to attain a distance between the rear surface of the display apparatus 10 and the wall W equal to a length of the protruding structure or the protruding portion. To attain the distance between the rear surface of the display apparatus 10 and the wall W, a distance adjusting member 210 may be used.

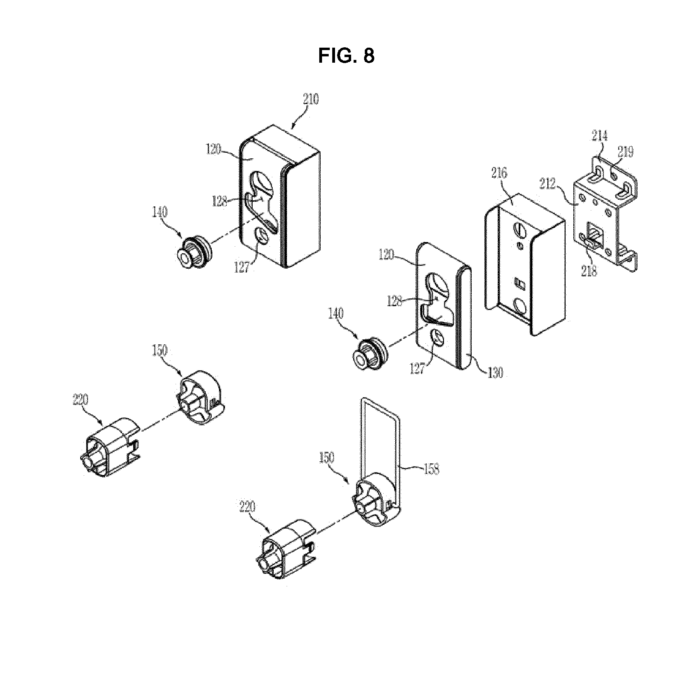

FIG. 8 is an exploded perspective view of the distance adjusting member. As shown in FIG. 8, the distance adjusting member 210 may include a first distance adjusting member 210 coupled to a rear surface of the first support panel 110, and a second distance adjusting member 220 coupled to a front surface of the second support protrusion 150.

The first distance adjusting member 210 includes a panel fixing portion 212 to which the first support panel 110 is fixed, a pair of wall fixing portions 214 bent from both ends of the panel fixing portion 212 so as to be fixed to the wall W, and a housing 216 to cover the panel fixing portion 212 and the wall fixing portions 214. The panel fixing portion 212 is provided with a hook 218 by which the first support panel 110 may be caught. Each wall fixing portion 214 is provided with a fourth screw hole 219 to fix the first distance adjusting member 210 to the wall W using a screw, etc.

The second distance adjusting member 220 has the same thickness as the first distance adjusting member 210 such that the second support protrusion 150 may come into contact with the wall W in a state in which the display apparatus 10 is not rotated.

By adjusting the thickness of the distance adjusting member 210 to correspond to the thickness of the protruding structure fixed to the wall W or the protruding portion of the wall W, the display apparatus 10 may be supported and fixed regardless of the shape of the wall W.

As is apparent from the above description, the exemplary embodiments ensure convenient implementation of a variety of wiring operations even if a space between a rear surface of a display apparatus and a wall is narrow.

Further, in a state in which the display apparatus is supported and fixed using a supporting device to the display apparatus, the display apparatus may be subjected to convenient and accurate position adjustment.

Although exemplary embodiments have been shown and described, it would be appreciated by those skilled in the art that changes may be made in exemplary embodiments without departing from the principles and spirit of the invention, the scope of which is defined in the claims and their equivalents.

## Claims

1. A supporting device for a display apparatus to fix the display apparatus to a wall, the supporting device comprising:
a plurality of support protrusions coupled to a rear surface of the display apparatus;
a plurality of first support panels fixed to the wall; and
a plurality of second support panels rotatably coupled to the first support panels, respectively, each second support panel having a receiving region by which a corresponding one of the plurality of support protrusions is caught.

2. The supporting device according to claim 1,
wherein each of the first support panels includes a shaft coupling portion protruding from an upper end thereof, the shaft coupling portion centrally defining a shaft bore and having a longitudinal slit, and
wherein each of the second support panels includes a first rotating shaft protruding from an inner surface thereof so as to be inserted into the shaft bore, and a second rotating shaft configured to surround an outer surface of the shaft coupling portion, the second rotating shaft defining an insertion gap with the first rotating shaft therebetween such that the shaft coupling portion is inserted into the insertion gap.

3. The supporting device according to claim 2, further comprising a first rotation stopper provided at the upper end of the first support panel connected to the shaft coupling portion, the first rotation stopper serving to limit a rotation angle of the second support panel by coming into contact with one end of the second rotating shaft when the second support panel is rotated.

4. The supporting device according to claim 3, further comprising a second rotation stopper configured to connect the first rotating shaft and the inner surface of the second support panel to each other, the second rotation stopper serving to limit a rotation angle of the second support panel by coming into contact with one end of the shaft coupling portion when the second support panel is rotated.

5. The supporting device according to claim 1, wherein each of the support protrusions includes a first diameter portion coming into contact with the rear surface of the display apparatus, a second diameter portion supported by the inner surface of the second support panel, and a third diameter portion configured to connect the first diameter portion and the second diameter portion to each other, the third diameter portion having a diameter less than diameters of the first diameter portion and the second diameter portion.

6. The supporting device according to claim 5, wherein the receiving region includes:
a support protrusion insertion hole having a diameter greater than the diameter of the second diameter portion such that the second diameter portion is inserted into the second panel;
a first guide slot communicating with the support protrusion insertion hole to guide movement of the support protrusion and the display apparatus in a first direction in a state in which the second diameter portion is inserted into the second support panel; and
a seating recess communicating with the first guide slot and configured such that the third diameter portion is seated therein.

7. The supporting device according to claim 6, wherein a width of the first guide slot is less than the diameter of the second diameter portion and greater than the diameter of the third diameter portion.

8. The supporting device according to claim 6, wherein the receiving region further includes a second guide slot intersecting and communicating with the first guide slot to guide movement of the display apparatus in a second direction different from the first direction.

9. The supporting device according to claim 6, wherein the first support panel includes a plurality of screw holes formed at positions corresponding to the support protrusion insertion hole and the first guide slot to fix the first support panel to the wall.

10. The supporting device according to claim 6, wherein at least one anti-separation member is coupled to at least one of the first support panel and the second support panel, to prevent the support protrusion received in the receiving region from being separated from the receiving region.

11. The supporting device according to claim 10, wherein the anti-separation member is pressed by the second diameter portion when the second diameter portion is inserted into the support protrusion insertion hole, thereby defining a space to allow the support protrusion to be moved in the first direction through the first guide slot, and is returned to an original position thereof when released from the second diameter portion as the support protrusion is seated in the seating recess.

12. The supporting device according to claim 11, wherein the anti-separation member comprises a leaf-spring.

13. The supporting device according to claim 12,
wherein at least one of the plurality of support protrusions includes at least one support frame to keep the display apparatus rotated, and
wherein the support frame is coupled to the support protrusion so as to be rotatable from the display apparatus to the wall.

14. The supporting device according to claim 13, wherein the support protrusion includes a rotation stopper to limit a rotation angle of the support frame.

15. The supporting device according to claim 1, further comprising a cover coupled to a lateral side of one of the first support panel and the second support panel to prevent the first and second support panels coupled to each other from being separated axially.
